# EUROPEAN PATENT APPLICATION

(11) **EP 4 787 581 A1**
(43) Date of publication of application: **05.08.2026**
(21) Application number: 24870265.6
(22) Date of filing: 23.08.2024
(51) Int. Cl.: H01M 50/291, H01M 50/209, H01M 50/244

(54) **BATTERY ASSEMBLY AND BATTERY PACK**

(30) Priority: 26.09.2023 CN 202322680041 U
(71) Applicant: BYD Company Limited, Shenzhen, Guangdong 518118 (CN)
(72) Inventor: LIU, Xufeng, Shenzhen, Guangdong 518118 (CN); ZHOU, Dongjie, Shenzhen, Guangdong 518118 (CN); CHEN, Jinfu, Shenzhen, Guangdong 518118 (CN); SUN, Zenan, Shenzhen, Guangdong 518118 (CN)
(74) Representative: Mathys & Squire
(86) International application number: PCT/CN2024/114360
(87) International publication number: WO 2025/066719

(57) **Abstract**

A battery assembly and a battery pack, the battery assembly comprising at least two batteries and a support member, wherein the at least two batteries each have side faces, end faces and transition faces, and are spaced apart in a first direction; and the support member is arranged between two adjacent batteries. The support member comprises a first support portion and a second support portion, wherein the first support portion and the second support portion are respectively supported between two adjacent transition faces of the two adjacent batteries and between two adjacent side faces of the two adjacent batteries; and the support member has cross-sections parallel to the first direction, the cross-sections comprising a first cross-section corresponding to the first support portion and a second cross-section corresponding to the second support portion, wherein the first cross-section has a first cross-sectional area, and the second cross-section has a second cross-sectional area, the ratio of the second cross-sectional area to the first cross-sectional area ranging from 0.20 to 6.00.

## Description

### CROSS-REFERENCE TO RELATED APPLICATIONS

The present disclosure claims priority to Chinese Patent Disclosure No. 202322680041.7 filed on September 26, 2023 and entitled "BATTERY ASSEMBLY AND BATTERY PACK", which is incorporated herein by reference in its entirety.

### FIELD

The present invention relates to the field of battery technology, and in particular to a battery assembly and battery pack.

### BACKGROUND

In the prior art, a battery pack typically includes a plurality of batteries spaced apart from one another. An insulation layer is placed between adjacent batteries to ensure electrical insulation. During the actual assembly of the battery pack, a gap must be maintained between adjacent batteries to allow for a certain degree of expansion. Consequently, the batteries in current battery packs may suffer from relatively poor stability.

### SUMMARY

The present disclosure is intended to provide a battery assembly that can improve the stability of the battery.

In order to achieve the above objectives, the present disclosure provides a battery assembly including: at least two batteries, wherein the at least two batteries each have side faces, end faces and transition faces connected between the side faces and the end faces, and the at least two batteries are spaced apart in a first direction; and a support member, which is arranged between the two adjacent batteries being spaced apart in the first direction. The support member includes a first support portion and a second support portion, wherein the first support portion is supported between two adjacent transition faces of the two adjacent batteries, and the second support portion is supported between opposing side faces of the two adjacent batteries. The support member has cross-sections parallel to the first direction; wherein the cross-sections include a first cross-section corresponding to the first support portion, the first cross-section having a first cross-sectional area, and a second cross-section corresponding to the second support portion, the second cross-section having a second cross-sectional area. A ratio of the second cross-sectional area to the first cross-sectional area ranges from 0.20 to 6.00.

In some embodiments, the battery is a square battery, and the battery has two opposite side faces along the first direction and two opposite end faces along a second direction, where the first direction and the second direction are perpendicular to each other.

In some embodiments, the support member has cross-sections parallel to the first direction and the second direction.

In some embodiments, the transition face is configured as an arc-shaped face, and the first support portion has a support face that fits against the corresponding transition face.

In some embodiments, the first support portion and the second support portion are integrally formed.

In some embodiments, two support members are arranged between the two adjacent batteries and are arranged sequentially along the second direction, and the two second support portions of the two support members are spaced apart, with the second direction perpendicular to the first direction.

In some embodiments, a connecting member is further arranged between the two adjacent batteries, and the connecting member is respectively connected to two supporting members arranged along the second direction. The connecting member together with the two supporting members collectively forms a ring-shaped support structure.

In some embodiments, the ring-shaped support structure defines an accommodation region, and a flame-retardant layer is arranged within the accommodation region.

In some embodiments, the battery assembly further includes an encapsulation structure; wherein the encapsulation structure encapsulates the ring-shaped support structure and the flame-retardant layer.

In some embodiments, a radius of the transition face ranges from 1.00 mm to 5.00 mm.

In some embodiments, a length of the second support portion in the second direction ranges from 3.00 mm to 110.0 mm, and the second direction is perpendicular to the first direction.

In some embodiments, a spacing between two adjacent side faces of two adjacent batteries ranges from 1.00 mm to 6.00 mm.

In some embodiments, the support member is made of a flexible material.

In some embodiments, the ratio of the second cross-sectional area to the first cross-sectional area ranges from 1.20 to 6.00.

In some embodiments, the ratio of the second cross-sectional area to the first cross-sectional area ranges from 1.50 to 6.00.

In some embodiments, the ratio of the second cross-sectional area to the first cross-sectional area ranges from 5.00 to 6.00.

According to the second aspect of the present disclosure, there is provided a battery pack including the battery assembly as described above.

In some embodiments, the battery pack includes two stoppers and a support structure, and the at least two batteries are arranged between the two stoppers, wherein the support structure is arranged between the stoppers and adjacent batteries.

Based on the above technical solution, in the battery assembly provided in the present disclosure, the first support portion is supported between two adjacent transition faces of the two adjacent batteries. That is, the first support portion fills the space between these two transition faces and the first support portion abuts against each of these two transition faces. Therefore, the first support portion is capable of supporting the two adjacent batteries. The second support portion is supported between two adjacent side faces of two adjacent batteries. That is, the second support portion fills the space between these two side faces and the second support portion abuts against each of these two side faces. Therefore, the second support portion is also capable of supporting the two adjacent batteries. As a result, the support member can effectively support two adjacent batteries, reduce the offset of the batteries, and enhance the stability of the batteries. Moreover, as the ratio of the second cross-sectional area to the first cross-sectional area ranging from 0.20 to 6.00, both the first support portion and second support portion are relatively stable with minor deformation and sufficient expansion space is reserved for the batteries, which can further reduce the offset of the batteries. Consequently, the battery assembly of the present disclosure can effectively reduce the offset of the batteries and improve their stability.

Other features and advantages of the present disclosure will be described in detail in the subsequent specific implementation section.

### BRIEF DESCRIPTION OF THE DRAWINGS

The accompanying drawings are used to provide further understanding of the present disclosure and form a part of the specification. They are used together with the specific embodiments below to explain the present disclosure, but do not constitute limitations on the present disclosure. In the attached figure:
FIG. 1 is a sectional schematic diagram of a partial structure of a battery pack provided according to the first embodiment of the present disclosure;
FIG. 2 is an enlarged view of part A in FIG. 1;
FIG. 3 is a schematic diagram of the dimensions of the corresponding components in FIG. 2;
FIG. 4 is a schematic diagram of the partial structure of a battery pack provided according to the second embodiment of the present disclosure;
FIG. 5 is a schematic diagram of the dimensions of the corresponding components in FIG. 4.

### DETAILED DESCRIPTION

The specific implementation methods of this disclosure will be described in detail below in conjunction with the accompanying drawings. It will be understood that the specific embodiments described herein are only for illustration and explanation of the present disclosure and are not intended to limit the present disclosure.

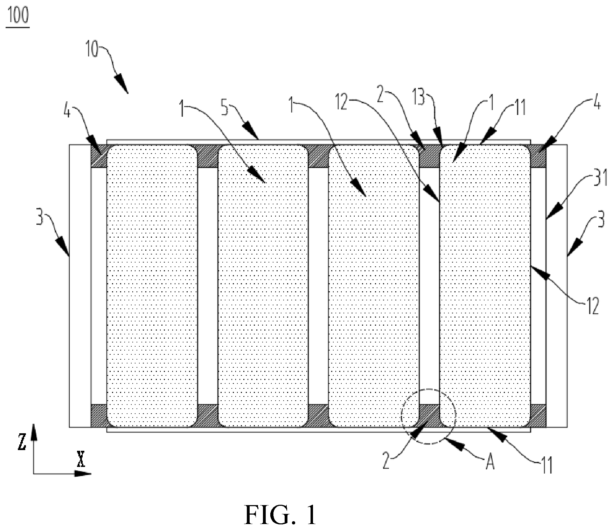

In the present disclosure, directional terms such as "first direction, second direction" may refer to the X and Z directions in FIG. 1, unless otherwise stated. "Internal" and "external" refer to the internal and external contours of each component. The terms "first" and "second" are used to distinguish one element from another and do not have order or importance. In addition, when referring to the accompanying drawings, the same reference numerals in different drawings represent the same or similar elements, which will not be repeated in the present disclosure.

According to the exemplary embodiments of the present disclosure, a battery assembly 10 is provided, as shown in FIGS. 1 to 3. The battery assembly 10 includes at least two batteries 1, wherein the at least two batteries 1 each have side faces 12, end faces 11 and transition faces 13 connected between the side faces 12 and end faces 11. The at least two batteries 1 are spaced apart in the first direction X; and a support member 2, which is arranged between two adjacent batteries 1 being spaced apart in the first direction X. The support member 2 includes a first support portion 21 and a second support portion 22, the first support portion 21 is supported between two adjacent transition faces 13 of two adjacent batteries 1, and the second support portion 22 is supported between two opposing side faces 12 of two adjacent batteries 1. The support member 2 has cross-sections parallel to the first direction X, the cross-sections include a first cross-section 212 corresponding to the first support portion 21, the first cross-section 212 having a first cross-sectional area, and a second cross-section 221 corresponding to the second support portion 22, the second cross-section 221 having a second cross-sectional area, and the ratio of the second cross-sectional area to the first cross-sectional area ranges from 0.20 to 6.00.

According to the above technical solution, in the battery assembly 10 provided in the present disclosure, the first support portion 21 is supported between two adjacent transition faces 13 of two adjacent batteries 1, that is, the first support portion 21 fills the space between these two transition faces 13 and the first support portion 21 abuts against each of these two transition faces 13. Therefore, the first support portion 21 is capable of supporting the two adjacent batteries 1; the second support portion 22 is supported between two adjacent side faces 12 of two adjacent batteries 1, that is, the second support portion 22 fills the space between these two side faces 12 and the second support portion 22 abuts against each of these two side faces 12. Therefore, the second support portion 22 is also capable of supporting the two adjacent batteries 1. As a result, the support member 2 can effectively support two adjacent batteries 1, reduce the offset of batteries 1, and enhance the stability of battery 1. Moreover, as the ratio of the second cross-sectional area to the first cross-sectional area ranging from 0.20 to 6.00, both the first support portion 21 and the second support portion 22 are relatively stable with minor deformation, and sufficient expansion space is reserved for batteries 1, which can further reduce the offset of the batteries 1 and improve their safety. Consequently, the disclosed battery assembly 10 can effectively reduce the offset of battery 1, improve the stability and safety of the batteries 1.

It will be noted that the offset of battery 1 mentioned above refers to the offset of battery 1 in the first direction X. No further elaboration will be provided on this point in the following embodiments of the present disclosure. In addition, the above-mentioned battery 1 may include one cell or a combination of a plurality of cells, and the present disclosure does not limit this.

It will be noted that in some embodiments of the present disclosure, the battery 1 may have two end faces 11, which are opposite along a second direction Z perpendicular to the first direction X. The battery 1 may have two side faces 12, which are opposite along the first direction X. Specifically, battery 1 may be a square battery with three pairs of opposing faces. One pair of opposing faces are the end faces 11, and another pair of opposing faces are the side faces 12. Furthermore, in the actual manufacturing and processing of batteries, the junction between two faces of the battery 1 often cannot, or is difficult, or is not cost-effective to form a right angle due to process limitations. Therefore, in practical products, a chamfer is typically adopted for transition between the two faces. The face formed by chamfer is the transition face 13, which connects the end face 11 and the side face 12. Here, the transition face 13 formed by chamfer can be an arc-shaped face, a flat face, or other forms of face.

In addition, the support member 2 has cross-sections parallel to the first direction X. In the embodiments of the present disclosure, the cross-section only needs to be parallel to the first direction X, because when the cross-section is parallel to the first direction X, the area ratio between the first cross-section 212 and the second cross-section 221 remains the same regardless of the direction along which the cross-section is taken. In further refinement, the cross-section is parallel to the first direction X and the second direction Z. Under this concept, measuring the second cross-sectional area and the first cross-sectional area can be more straightforward.

In the preferred embodiment, the ratio of the second cross-sectional area to the first cross-sectional area ranges from 1.20 to 6.00.

In the preferred embodiment, the ratio of the second cross-sectional area to the first cross-sectional area ranges from 1.50 to 6.00.

In the preferred embodiment, the ratio of the second cross-sectional area to the first cross-sectional area ranges from 5.00 to 6.00.

In the exemplary embodiments of the present disclosure, Table 1 below presents experimental data obtained from vibration experiments and thermal runaway tests conducted on the battery assembly 10 of the present disclosure. Table 1 includes first to thirteenth embodiments. Here, parameter a in Table 1 refers to the length of the second support portion 22, parameter b refers to the spacing between two adjacent side faces 12 of two adjacent batteries 1, parameter R refers to the radius of the transition face 13, parameter S1 refers to the second cross-sectional area, and parameter S2 refers to the first cross-sectional area. In addition, the units of parameter a, parameter b, and parameter R are all in millimeters. Furthermore, the values of S1/S2 in the first to thirteenth embodiments all fall within the range of 0.20 to 6.00.

Referring to Table 1 below, it can be seen that when the ratio of the second cross-sectional area to the first cross-sectional area ranges from 0.20 to 6.00, the deformation of the support member 2 is minor or almost negligible. Therefore, the batteries 1 in the battery assembly 10 of the present disclosure exhibit good stability and can substantially maintain their own stability during vibration. In addition, when the ratio of the second cross-sectional area to the first cross-sectional area ranges from 0.20 to 6.00, the pressure relief valve of the battery 1 can open normally during thermal expansion.

**Table 1:**

| | | | | | | | | | | | | | |
|---|---|---|---|---|---|---|---|---|---|---|---|---|---|
| | | | | | | | | | | | | | |

| | Embodiment **1** | Embodiment 2 | Embodiment 3 | Embodiment 4 | Embodiment 5 | Embodiment 6 | Embodiment 7 | Embodiment 8 | Embodiment 9 | Embodiment 10 | Embodiment 11 | Embodiment 12 | Embodiment 13 |
|---|---|---|---|---|---|---|---|---|---|---|---|---|---|
| a | 0.5 | 1.5 | 7.5 | 5.5 | 8.5 | 8.5 | 8.5 | 10 | 10 | 112 | 21 | 25 | 30 |
| b | 1 | 2.5 | 1.5 | 2.5 | 2.5 | 3.5 | 1.5 | 3.5 | 3.5 | 4 | 6 | 3.5 | 3.5 |
| R | 1.5 | 3.5 | 5 | 3.5 | 3.5 | 3.5 | 3.5 | 3.5 | 2.5 | 3.5 | 5 | 3.5 | 3.5 |
| S1 | 0.5 | 3.75 | 11.25 | 13.75 | 21.25 | 29.75 | 12.75 | 35 | 35 | 44.8 | 126 | 87.5 | 205 |
| S2 | 2.4675 | 14.0175 | 1825 | 14.0175 | 14.0175 | 17.5175 | 10.5175 | 17.5175 | 11.4375 | 192675 | 40.75 | 17.5175 | 17.5175 |
| S1/S2 | 0.20 | 0.27 | 0.62 | 0.98 | 1.52 | 1.7 | 1.21 | 2.00 | 3.06 | 2.33 | 4.09 | 5.00 | 5.99 |
| Battery status1 | Slight deformation of the support member (within allowable limits). | | | | Minimal deformation of the support member. | | | | | | | Almost no deformation of the support member. | |
| Battery status2 | The pressure relief valve can open normally during battery expansion. | | | | | | | | | | | | |

Referring to Table 2 below, Table 2 below presents experimental data obtained from vibration experiments and thermal runaway tests conducted on battery assembly 10 of the comparative example. Here, parameter a in Table 1 refers to the length of the second support portion 22, parameter b refers to the spacing between two adjacent side faces 12 of two adjacent batteries 1, parameter R refers to the radius of the transition face 13, parameter S1 refers to the second cross-sectional area, and parameter S2 refers to the first cross-sectional area. In addition, the units of parameter a, parameter b, and parameter R are all in millimeters.

**Table 2:**

| | | | | | |
|---|---|---|---|---|---|
| | | | | | |

| | Comparative Example 1 | Comparative Example 2 | Comparative Example 3 | Comparative Example 4 | Comparative Example 5 |
|---|---|---|---|---|---|
| a | 0 | 0.5 | 33 | 39 | 45 |
| b | 3.5 | 1 | 3.5 | 3.5 | 3.5 |
| R | 3.5 | 2 | 3.5 | 2.5 | 2.5 |
| S1 | 0 | 0.5 | 115 | 136.5 | 157.5 |
| S2 | 17.5175 | 3.72 | 17.5175 | 11.4375 | 11.4375 |
| S1/S2 | 0 | 0.13 | 6.59 | 11.93 | 13.77 |
| Battery status 1 | Poor support performance; the support member detaches clearly from between the batteries. | | Almost no deformation of the support member. | | |
| Battery status2 | The pressure relief valve can open normally during battery expansion. | | After battery expansion, insufficient expansion space leads to increased internal pressure, resulting in premature valve opening. | | |

In the above embodiments and comparative examples, battery 1 is selected as a square battery, and the cross-section is selected as the cross-section of support member 2 parallel to the first direction X and the second direction Z.

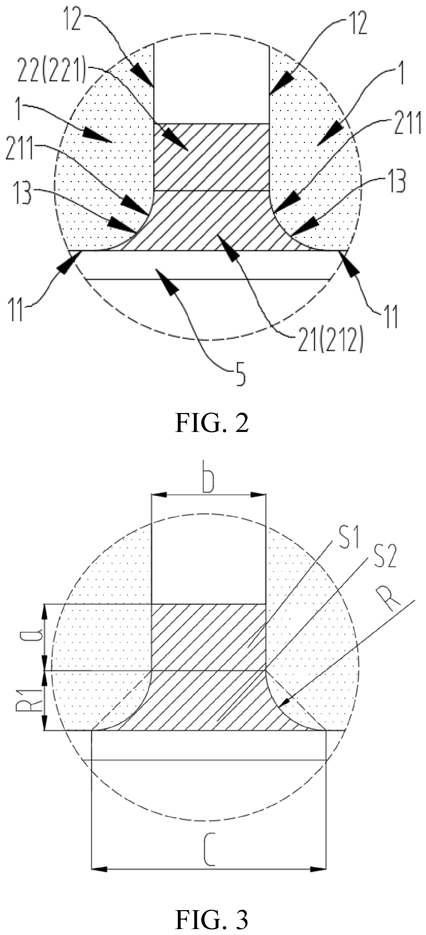

In the vibration experiment conducted on battery assembly 10 according to the embodiments of the present disclosure, with reference to Table 1 above, when the ratio of the second cross-sectional area to the first cross-sectional area ranges from 0.20 to 0.98, the offset of battery 1 can range from 0.9 mm to 0.65 mm, during which the support member 2 undergoes slight deformation. When the ratio of the second cross-sectional area to the first cross-sectional area ranges from 1.52 to 3.09, the offset of the battery 1 can range from 0.30 mm to 0.65 mm, during which the support member 2 undergoes minimal deformation. When the ratio of the second cross-sectional area to the first cross-sectional area ranges from 5.00 to 5.99, the offset of battery 1 can be less than 0.30 mm, during which the support member 2 exhibits almost no deformation. When the offset of battery 1 exceeds 0.9 mm and gradually increases, the deformation of support member 2 becomes increasingly severe until it detaches from between the two adjacent batteries 1. Therefore, the deformation degree of support member 2 can be judged based on the battery offset. Here, the offset of battery 1 refers to the distance between the battery positions of two state nodes at the beginning and end of the battery vibration test. In the embodiments of the present disclosure, vibration experiments and thermal runaway tests are conventional testing methods, which are not described in detail herein. In addition, the cross-sections shown in FIGS. 2 to 3 are taken along the second direction Z from the middle of the battery. In other embodiments, cross-sections can be taken at other locations, such as one-third or one-fifth of the battery's length, but not at the ends of the battery perpendicular to both the first direction X and the second direction Z, in order to reduce measurement errors.

Furthermore, by combining the information from Table 1 and Table 2, and comparing Embodiments 1 to 13 with Comparative Examples 1 to 2, it can be seen that when the ratio of the second cross-sectional area to the first cross-sectional area ranges from 0.00 to 0.20, the battery assembly 10 undergoes more severe deformation during vibration, which can cause the support member 2 to detach from between the two adjacent batteries 1, resulting in the support member 2 losing its supporting function and causing significant offset of the battery 1. Therefore, when the ratio of the second cross-sectional area to the first cross-sectional area ranges from 0.00 to 0.20, the stability of battery 1 in battery assembly 10 is relatively poor. In contrast, when the ratio of the second cross-sectional area to the first cross-sectional area ranges from 0.20 to 6.00, the deformation of the support member 2 is minor, or it may even exhibit almost no deformation, resulting in high stability of the battery 1 in the battery assembly 10.

Furthermore, by combining the information from Table 1 and Table 2, and comparing Embodiments 1 to 11 with Comparative Examples 3 to 5, it can be seen that when the ratio of the second cross-sectional area to the first cross-sectional area exceeds 6.00, although the support member 2 exhibits almost no deformation and the offset of battery 1 is small, the expansion of battery 1 is affected. Specifically, the excessively large area of the second support portion 22 results in insufficient space reserved for the expansion of battery 1. Consequently, when battery 1 expands, support member 2 compresses battery 1, causing an increase in internal pressure within battery 1 and leading to premature opening of the pressure relief valve. This, in turn, creates safety risks for battery 1 and adversely affects the performance of the battery pack 100. Conversely, when the ratio ranged from 0.20 to 6.00, the support member 2 reserves sufficient expansion space for battery 1. During battery expansion, support member 2 does not excessively compress battery 1, thereby allowing the pressure relief valve to open normally and ensuring the safety of battery 1.

In the exemplary embodiment of the present disclosure, referring to FIGS. 1 to 3, the transition face 13 may be configured as an arc-shaped face, and the first support portion 21 may have a support face 211 that conforms to the corresponding transition face 13. In this way, by ensuring conformity between the support face 211 and the corresponding transition face 13, any gap between the supporting face 211 and the corresponding transition face 13 can be avoided, thereby eliminating any gap between the first support portion 21 and the transition face 13. Consequently, this facilitates filling the space between two adjacent transition faces 13 with the first support portion 21, making the compressive force between the two adjacent batteries 1 more uniform. As a result, the supporting effect of the first supporting portion 21 on the battery 1 can be ensured and enhanced. Configuring the transition face 13 as an arc face is convenient for processing the transition face 13 on one hand, and on the other hand, facilitates forming the arc-shaped support face 211 on the first support portion 21 to match the shape of the transition face 13, which is beneficial for achieving conformity between the support face 211 and the transition face 13.

It will be noted that in the implementation where the transition face 13 is an arc-shaped face, as shown in FIG. 3, with parameter a referring to the length of the second support part 22, parameter b referring to the spacing between two adjacent side faces 12 of two adjacent batteries 1, parameter R referring to the radius of the transition face 13, parameter S1 referring to the second cross-sectional area, and parameter S2 referring to the first cross-sectional area, the second cross-sectional area S1=a * b, and the first cross-sectional area S2=(b+2R) * R - π R²/2. In the embodiments of the present disclosure, Tables 1 and 2 mentioned above are measured using this method. In this embodiment, the arc length of the arc-shaped transition face 13 corresponds to a quarter circle, that is, the arc center angle of the arc-shaped transition face 13 is 90°. Therefore, the aforementioned calculation method can be used.

In other embodiments, if the arc center angle of the arc-shaped transition face 13 is not 90° or if the transition face 13 is not an arc-shaped face, as shown in FIG. 3, the present disclosure can refer to the area of the isosceles trapezoid with dashed lines in FIG. 3 as the first cross-sectional area S2, that is, in this case, the first cross-sectional area S2 = (1/2) * (b+C) * R1. This approach can minimize the impact of measurement errors in R on the accuracy of S2. In other words, calculating S2 using the formula S2 = (1/2) * (b+C) * R1 yields higher accuracy for the first cross-sectional area. Here, R1 is the distance from the junction between S1 and S2 to the base edge, as specifically shown in FIG. 3, and C is the distance between the junctions of the end face 11 and the transition face 13 on the two batteries, as also specifically shown in FIG. 3.

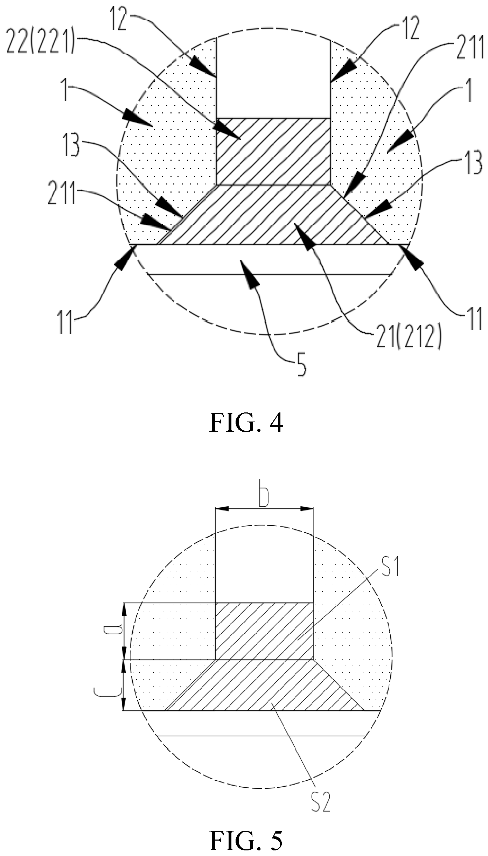

In some other embodiments of the present disclosure, as shown in FIGS. 4 and 5, the transition face 13 may be configured as an inclined flat face, and the first support portion 21 may have a support face 211 that conforms to the corresponding transition face 13. In this way, by adhering the supporting face 211 to the corresponding transition face 13. Similarly, by ensuring conformity between the support face 211 and the corresponding transition face 13, any gap between them can be avoided, thereby eliminating any gap between the first support portion 21 and the transition face 13. Consequently, this facilitates filling the space between two adjacent transition faces 13 with the first support portion 21, making the compressive force between the two adjacent batteries 1 more uniform. Thus, the supporting effect of the first support portion 21 on the battery 1 can be ensured and enhanced.

Here, according to some embodiments, the transition face 13 can be configured as an inclined flat face forming a 45° angle with a horizontal plane. In such an embodiment, as shown in FIG. 5, parameter c can refer to the height of the first support portion 21. Understandably, the projected height of the transition face 13 on the side face 12 is also c. Based on parameter a referring to the length of the second support portion 22, parameter b referring to the spacing between two adjacent side faces 12 between two adjacent batteries 1, parameter c referring to the height of the first support portion 21, parameter S1 referring to the second cross-sectional area, and parameter S2 referring to the first cross-sectional area, the second cross-sectional area S1=a * b, and the first cross-sectional area S2=(b+2c) * c - c².

According to some embodiments, in implementations where the transition face 13 is an arc face, due to the manufacturing process constraints of the battery casing, the radius of the transition face 13 is generally required to be within a preset range. For example, in embodiments of the present disclosure, the radius of the transition face 13 can range from 1.00 mm to 5.00 mm. For example, a radius of 1.20 mm, 1.50 mm, 1.70 mm, 2.00 mm, 2.50 mm, 2.70 mm, 3.00 mm, 3.50 mm, 4.00 mm 4.50 mm 5.00 mm, etc. Here, the radius of the transition face 13 can correspond to parameter R in FIG. 3, i.e. parameter R in Tables 1 and 2 mentioned above. This parameter R can range from 1.00 mm to 5.00 mm. This can reduce the manufacturing difficulty of the casing and enhance the volumetric utilization of the battery casing. Moreover, keeping the radius of the transition face 13 relatively small can prevent excessive offset of battery 1 due to its own expansion when the radius is too large, which could otherwise lead to unintended detachment of support member 2. According to some embodiments, the aforementioned parameter R may be 3 mm. Furthermore, based on experiments conducted by the inventor, it has been observed that with parameters a and b held constant, decreasing the radius R of the transition face 13 further reduces the offset of the battery. Therefore, in product manufacturing and production, parameters a and b can be kept constant, and the radius of the transition face 13 can be decreased to reduce the offset of battery 1, thereby further enhancing its stability.

Additionally, experiments by the inventor have shown that with parameters R and b held constant, increasing the length a of the second support portion 22 further reduces the battery offset. Thus, in product manufacturing and production, parameters R and b can be maintained, and the length of the second support portion 22 can be increased to decrease the offset of battery 1, further enhancing its stability.

In an exemplary embodiment of the present disclosure, the first support portion 21 and the second support portion 22 may be integrally formed. This can reduce the number of components in the battery assembly 10 and ensure the connection strength between the first support portion 21 and the second support portion 22. Of course, in other embodiments, the first support portion 21 and the second support portion 22 may also be separately formed, which can facilitate the assembly of the battery assembly 10. Here, the second support portion 22 may be adhered to the first support portion 21, which is not limited by the present disclosure.

In an exemplary embodiment of the present disclosure, the second support portion 22 may be made of a flexible material, such as soft silicone or foam, so that it can be compressed to accommodate a certain degree of expansion of battery 1. Correspondingly, the first support portion 21 may also be made of a flexible material, such as soft silicone or foam. That is, the support member 2 may be made of a flexible material, which is not limited by the present disclosure.

In an exemplary embodiment of the present disclosure, referring to FIG. 1, two support members 2 may be arranged between the two adjacent batteries 1 and arranged sequentially along the second direction Z. The second support portions 22 of the two support members 2 are spaced apart from each other, and the second direction Z is perpendicular to the first direction X. In this way, the two support members 2 provide better support for batteries 1, thereby improving their stability. Additionally, the space between the two support members 2 can accommodate the expansion of battery 1, thus enhancing its safety.

In some embodiments of the present disclosure, in an implementation where the second support portions 22 of the two support members 2 are spaced apart and the ratio of the second cross-sectional area to the first cross-sectional area ranges from 0.20 to 6.00, referring to FIG. 1, the space between the two second support portions 22 can accommodate the expansion of battery 1. This design can reserve a certain expansion space for battery 1 while ensuring the support effect of support members 2 on the two adjacent batteries 1. Utilizing this expansion space allows battery 1 to expand to some extent, thereby further improving its safety. Here, the ratios of the second cross-sectional area to the first cross-sectional area for the two support members 2 may be the same or different, which is not limited by the present disclosure.

In some embodiments of the present disclosure, referring to FIG. 1, a connecting member (not shown) may be further arranged between two adjacent batteries 1. The connecting member is connected to the two support members 2 arranged along the second direction Z, and the connecting member together with the two support members 2 collectively forms a ring-shaped support structure. In this way, the ring-shaped support structure can further enhance the support for batteries 1, thereby improving their stability. Here, according to some embodiments, the connecting member may include two connecting segments spaced apart along a third direction. The third direction is perpendicular to both the first direction X and the second direction Z. The two connecting segments may be connected end-to-end with the two support members 2 to collectively form the ring-shaped support structure, which is not limited by the present disclosure. Furthermore, arranging the ring-shaped support structure between batteries 1 can also serve to reserve expansion space for battery 1, improving its safety.

In some embodiments of the present disclosure, the ring-shaped support structure defines an accommodation region, and a flame-retardant layer is disposed within the accommodation region. In this way, the flame-retardant layer can block the spread of fire between the two adjacent batteries 1, preventing the fire from escalating. Typically, the flame-retardant layer may be made of materials such as aerogel. By combining the ring-shaped support structure with the flame-retardant layer, not only can heat diffusion between the two batteries 1 be isolated, improving the safety of battery 1, but the structural strength of support member 2 can also be enhanced, further increasing the stability of battery 1.

In some embodiments, to reduce movement of the flame-retardant layer and lower the difficulty of installing the assembled structure of the flame-retardant layer and the ring-shaped support structure between batteries 1, the flame-retardant layer is connected to the ring-shaped support structure.

In some embodiments, to reduce the impact of support member 2 on the expansion of battery 1 during battery expansion, the flame-retardant layer possesses a certain degree of elastic deformation, allowing it to deform adaptively when battery 1 expands.

In some embodiments, the battery assembly 10 may further include an encapsulation structure, the encapsulation structure encapsulates the ring-shaped support structure and the flame-retardant layer. This facilitates the assembly of the battery assembly 10 by enclosing the ring-shaped support structure and the flame-retardant layer together.

In an exemplary embodiment of the present disclosure, referring to FIGS. 1 to 5, due to the influence of battery size, the length a of the second support portion 22 along the second direction Z is generally limited to a preset range, where the second direction Z is perpendicular to the first direction X. For example, in embodiments of the present disclosure, the length of the second support portion 22 may range from 3.00 mm to 110.00 mm, such as 3.00 mm, 3.50 mm, 4.70 mm, 5.00 mm, 5.50 mm, 6.00 mm, 7.00 mm, 8.00 mm, 9.00 mm, 10.00 mm, 10.50 mm, 11.00 mm, 11.50 mm, 12.00 mm, 15.00 mm, 20.00 mm, 30.00 mm, 40.00 mm, 50.00 mm, 60.00 mm, 70.00 mm, 80.00 mm, 90.00 mm, 100.00 mm, 110.00 mm, etc. Here, referring to FIG. 3, parameter a refers to the length of the second support portion 22. When parameter a ranges from 3.00 mm to 110.00 mm, it ensures that the second support portion 22 effective supports the two adjacent batteries 1 and prevents the second support portion 22 itself from loosening or shifting. When the second direction Z corresponds to the height direction of battery 1, the value of parameter a may be half the height of battery 1. For example, when parameter a is 110.00 mm, the height of battery 1 is 220.00 mm. Here, according to some embodiments and referring to Table 1 above, with parameters b and R held constant, increasing the length of the second support portion 22 reduces the offset of battery 1. Therefore, with parameters b and R unchanged, the length of the second support portion 22 can be increased to reduce the offset of battery 1 and enhance its stability.

Further, parameter a is generally less than half the battery height, allowing two support members 2 to cooperatively restrict the movement of battery 1 and improve its stability. Specifically, as shown in FIG. 1, the battery height refers to the length of the battery along the second direction Z.

In the installation requirements for batteries 1 within the battery pack 100, to ensure the volumetric utilization of the battery pack 100 and the possibility of arranging related support members 2 between batteries 1, the length of the gap between batteries 1 is generally required to be within a certain range. In an exemplary embodiment of the present disclosure, referring to FIGS. 1 to 5, the spacing between the two adjacent side faces 12 of two adjacent batteries 1 may range from 1.00 mm to 6.00 mm, such as 1.00 mm, 1.20 mm, 1.50 mm, 1.70 mm, 2.00 mm, 2.50 mm, 2.70 mm, 3.00 mm, 3.50 mm, 4.00 mm, 4.50 mm, 5.00 mm, 5.50 mm, 6.00 mm, etc. Here, referring to FIG. 3, parameter b therein can refer to the spacing between two adjacent side faces 12, i.e., parameter b may range from 1.00 to 6.00 mm. Keeping the spacing between the two side faces 12 relatively small can prevent excessive offset of battery 1 due to its own expansion when the spacing is too large. Additionally, with parameters a and R held constant, the value of parameter b is also influenced by the required expansion space for battery 1. Both overly small and overly large values of parameter b can affect the safety of battery 1. Therefore, to balance battery stability and expansion space, specific values for parameter b can be adaptively designed according to practical needs in the present disclosure. Moreover, an excessively large value for parameter b can also reduce the volumetric utilization and volumetric energy density of the battery pack 100.

According to a second aspect of the present disclosure, a battery pack 100 is provided, including the battery assembly 10 as described above. The battery pack 100 possesses all the beneficial effects of the aforementioned battery assembly 10, which will not be reiterated herein.

In some embodiments of the present disclosure, referring to FIG. 1, the battery pack 100 may include two stoppers 3 and a support structure 4. At least two batteries 1 are arranged between the two stoppers 3, wherein the support structure 4 may be arranged between a stopper 3 and an adjacent battery 1. Here, the support structure 4 can assist in supporting the battery near the stopper 3, thereby improving the stability of battery 1. The stopper 3 may be configured as an end plate or may form part of a tray, which is not limited by the present disclosure.

In some embodiments of the present disclosure, referring to FIG. 1, two support structures 4 may be arranged between a stopper 3 and the adjacent battery 1. The two support structures 4 are arranged sequentially along the second direction Z, with the second direction Z perpendicular to the first direction X. The difference between this support structure 4 and the aforementioned support member 2 lies in that the face of the support structure 4 contacting the stopper 3 is flat. In this case, the stopper 3 has a blocking face 31 that cooperates with the support structure. Furthermore, as shown in FIG. 1, when the second support portions 22 of the two support members 2 are spaced apart, the two support structures 4 may also be spaced apart.

In an exemplary embodiment of the present disclosure, referring to FIG. 1, the battery pack 100 may include cold plates 5. A cold plate 5 may be arranged on each side of battery 1 along the second direction Z, and an insulating layer may be attached to the cold plate 5. The cold plate 5 may be bonded to battery 1 and contact the first support portion 21. In this case, the first support portion 21 may be made of a thermally conductive adhesive. Thus, heat generated by battery 1 can be transferred to the cold plate 5 via the first support portion 21, thereby enhancing the heat dissipation performance of the battery pack 100.

The preferred embodiments of the present disclosure have been described in detail above in conjunction with the accompanying drawings. However, the present disclosure is not limited to the specific details in the aforementioned embodiments. Within the scope of the technical concept of the present disclosure, various simple modifications can be made to the technical solutions of the present disclosure, and all such simple modifications fall within the protection scope of the present disclosure.

It will also be noted that the various specific technical features described in the above detailed embodiments can be combined in any suitable manner without contradiction. To avoid unnecessary repetition, the present disclosure will not separately enumerate all possible combinations.

Furthermore, the various different embodiments of the present disclosure may also be combined arbitrarily, provided that such combinations do not depart from the spirit of the present disclosure, and such combinations will also be regarded as content disclosed herein.

## Claims

1. A battery assembly (10), comprising:
at least two batteries (1), wherein the at least two batteries (1) each have side faces (12), end faces (11) and transition faces (13) being connected between the side faces (12) and the end faces (11), and the at least two batteries (1) being spaced apart in a first direction; and
a support member (2) being arranged between the two adjacent batteries (1) being spaced apart in the first direction, the support member (2) comprising a first support portion (21) and a second support portion (22), the first support portion (21) being supported between two adjacent transition faces (13) of the two adjacent batteries (1), and the second support portion (22) being supported between two opposing side faces (12) of the two adjacent batteries (1),
the support member (2) having cross-sections parallel to the first direction, the cross-sections comprising a first cross-section (212) corresponding to the first support portion (21), the first cross-section (212) having a first cross-sectional area, the cross-section comprising a second cross-section (221) corresponding to the second support portion (22), the second cross-section (221) having a second cross-sectional area, and a ratio of the second cross-sectional area to the first cross-sectional area ranging from 0.20 to 6.00.

2. The battery assembly (10) according to claim 1, wherein the battery (1) is a square battery, and the battery (1) having two opposite side faces (12) along the first direction and two opposite end faces (11) along a second direction, the first direction and the second direction being perpendicular to each other.

3. The battery assembly (10) according to claim 2, wherein the support member (2) has cross-sections parallel to the first direction and the second direction.

4. The battery assembly (10) according to any one of claims 1 to 3, wherein the transition face (13) is configured as an arc-shaped face, and the first support portion (21) having a support face (211) fitting against the corresponding transition face (13).

5. The battery assembly (10) according to claim 1, wherein the first support portion (21) and the second support portion (22) are integrally formed.

6. The battery assembly (10) according to any one of claims 1 to 3, wherein two support members (2) being arranged between the two adjacent batteries (1) and being arranged sequentially along the second direction, and the two second support portions (22) of the two support members (2) being spaced apart, with the second direction perpendicular to the first direction.

7. The battery assembly (10) according to claim 6, wherein a connecting member is further arranged between the two adjacent batteries (1), and the connecting member being respectively connected to two supporting members (2) arranged along the second direction, and the connecting member together with the two supporting members (2) collectively forming a ring-shaped support structure.

8. The battery assembly (10) according to claim 7, wherein the ring-shaped support structure defines an accommodation region, and a flame-retardant layer being arranged within the accommodation region.

9. The battery assembly (10) according to claim 8, wherein the battery assembly (10) further comprises an encapsulation structure, the encapsulation structure encapsulating the ring-shaped support structure and the flame-retardant layer.

10. The battery assembly (10) according to claim 4, wherein a radius of the transition face (13) ranges from 1.00 mm to 5.00 mm.

11. The battery assembly (10) according to claim 1, wherein a length of the second support portion (22) in the second direction ranges from 3.00 mm to 110.0 mm, and with the second direction perpendicular to the first direction.

12. The battery assembly (10) according to claim 1, wherein a spacing between two adjacent side faces (12) of the two adjacent batteries (1) ranges from 1.00 mm to 6.00 mm.

13. The battery assembly (10) according to claim 1, wherein the support member (2) is made of a flexible material.

14. The battery assembly (10) according to claim 1, wherein the ratio of the second cross-sectional area to the first cross-sectional area ranges from 1.20 to 6.00.

15. The battery assembly (10) according to claim 14, wherein the ratio of the second cross-sectional area to the first cross-sectional area ranges from 1.50 to 6.00.

16. The battery assembly (10) according to claim 15, wherein the ratio of the second cross-sectional area to the first cross-sectional area ranges from 5.00 to 6.00.

17. A battery pack (100), comprising a battery assembly (10) according to any one of claims 1 to 16.

18. The battery pack (100) according to claim 17, wherein the battery pack (100) comprises two stoppers (3) and a support structure (4), and at least two batteries (1) being arranged between the two stoppers (3), wherein the support structure (4) being arranged between the stopper (3) and adjacent batteries (1).
